(19) Europäisches Patentamt
European Patent Office
Office européen des brevets

(11) **EP 2 335 085 B1**

(12) **FASCICULE DE BREVET EUROPEEN**

(45) Date de publication et mention
de la délivrance du brevet:
**26.12.2012 Bulletin 2012/52**

(21) Numéro de dépôt: **09815671.4**

(22) Date de dépôt: **21.09.2009**

(51) Int Cl.:
**G01S 19/44** (2010.01)   **G01S 19/07** (2010.01)

(86) Numéro de dépôt international:
**PCT/EP2009/062217**

(87) Numéro de publication internationale:
**WO 2010/034694 (01.04.2010 Gazette 2010/13)**

(54) **TRAITEMENT DE SIGNAUX DE RADIONAVIGATION UTILISANT UNE COMBINAISON WIDELANE**

VERARBEITUNG VON FUNKNAVIGATIONSSIGNALEN MIT Hilfe EINER Widelane-KOMBINATION

PROCESSING OF RADIONAVIGATION SIGNALS USING A WIDE-LANE COMBINATION

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **23.09.2008 FR 0856378**

(43) Date de publication de la demande:
**22.06.2011 Bulletin 2011/25**

(73) Titulaire: **Centre National d'Etudes Spatiales 75039 Paris Cedex 01 (FR)**

(72) Inventeurs:
• **MERCIER, Flavien**
  **F-31320 Auzeville (FR)**
• **LAURICHESSE, Denis**
  **F-31170 Tournefeuille (FR)**

(74) Mandataire: **Office Freylinger**
  **P.O. Box 48**
  **L-8001 Strassen (LU)**

(56) Documents cités:
**EP-A- 1 724 605**

• **D. LAURICHESSE ET AL.: "Real Time Zero-difference Ambiguities Fixing and Absolute RTK" PROC. OF THE 2008 NATIONAL TECHNICAL MEETING OF THE ION, 28 janvier 2008 (2008-01-28), pages 747-754, XP002532442 San Diego, CA, USA**
• **D. LAURICHESSE AND F. MERCIER: "Integer Ambiguity Resolution on Undifferenced GPS Phase Measurements and its Application to PPP" PROCEEDINGS OF ION GNSS 2007, 25 septembre 2007 (2007-09-25), pages 839-848, XP002553916 Fort Worth, Texas , USA**
• **SIMON BANVILLE ET AL.: "Satellite and Receiver Phase Bias Calibration for Undifferenced Ambiguity Resolution" PROC. OF THE 2008 NATIONAL TECHNICAL MEETING OF THE ION, 28 janvier 2008 (2008-01-28), pages 711-719, XP002532443 San Diego, CA, USA**
• **X. SHEN AND Y. GAO: "Ambiguity Pseudo-fixing in Precise Single Point Positioning" PROCEEDINGS OF THE ION 58TH ANNUAL MEETING AND CIGTF 21ST GUIDANCE TEST SYMPOSIUM, 24 juin 2002 (2002-06-24), pages 163-168, XP002553917 Albuquerque, New Mexico, USA**
• **ROBERT S. ET AL.: "Using Optimal GNSS Multi-Frequency Carrier Phase Combinations for Precise Kinematic Positioning" PROCEEDINGS OF THE ION 58TH ANNUAL MEETING AND CIGTF 21ST GUIDANCE TEST SYMPOSIUM, 24 juin 2002 (2002-06-24), pages 223-230, XP002553918 Albuquerque, New Mexico, USA**

**Description**

**Domaine technique**

La présente invention concerne le domaine des systèmes de radionavigation ou de positionnement par satellite, en particulier un procédé de traitement des signaux de radionavigation émis par des satellites d'un tel système.

**Etat de la technique**

Les systèmes de positionnement par satellite comme GPS (Global Positioning System), Galileo, GLONASS, QZSS, Compass, IRNSS et autres utilisent des signaux de radionavigation modulés appelés « en spectre étalé ». Ces signaux véhiculent essentiellement des codes pseudo-aléatoires formés de séquences numériques se répétant périodiquement, dont la fonction principale est de permettre un Accès Multiple à Répartition de Code (AMRC) et la fourniture d'une mesure du temps de propagation du signal émis par le satellite. Accessoirement, les signaux de radionavigation peuvent aussi transporter une charge utile.

Les signaux de radionavigation sont formés par modulation des fréquences centrales (porteuses). Dans le cas de GPS, les signaux de radionavigation sont transmis dans les bandes de fréquences L1, centrée sur 1575,42 MHz et L2, centrée sur 1227,6 MHz. Au cours de la modernisation de GPS, la bande L5, centrée sur 1176,45 MHz sera ajoutée. Les satellites de la constellation Galileo transmettront dans les bandes E2-L1-E1 (la portion de bande médiane L1 étant la même que celle du GPS), E5a (qui, selon la nomenclature Galileo, représente la bande L5 prévue pour le GPS), E5b (centrée sur 1207,14 MHz) et E6 (centrée sur 1278,75 MHz).

Les mesures élémentaires que peut effectuer un récepteur comprennent les mesures de code et les mesures de phase de porteuse. Ces mesures élémentaires peuvent évidemment être combinées entre elles. Les mesures de code sont typiquement d'une précision métrique tandis que les mesure de phase sont d'une précision de quelques mm. Or les mesures de phase présentent le désavantage qu'elles ne livrent que la partie fractionnaire de la différence de phase de la porteuse entre l'émission par le satellite et le récepteur. Les mesures de phase sont donc ambiguës dans le sens que le nombre de cycles entiers entre le satellite et le récepteur est inconnu au départ. Afin de pouvoir bénéficier de la précision des mesures de phase, un récepteur doit résoudre les ambiguïtés dont elles sont entachées.

La résolution des ambiguïtés de phase est couramment effectuée par différentiation des mesures de phase (simple ou double différentiation) entre satellites et/ou entre récepteurs. Cette technique de différentiation permet d'éliminer des causes d'erreur (non modélisées) communes à plusieurs mesures, et permet ainsi de faire apparaître une information entière, dont la prise en compte améliore encore les performances. Cependant, cette information entière consiste en des différences d'une ou plusieurs ambiguïtés de phase élémentaires et ne permet pas, en général, de remonter aux ambiguïtés de phase élémentaires.

D. Laurichesse et al., "Real Time Zero-Différence Ambiguities Fixing and Absolute RTK", Proc. of the 2008 National Meeting of the ION, décrit un procédé de résolution des ambiguïtés de phase de porteuse GPS par rapport aux mesures non différentiées de code et de phase des signaux.

**Objet de l'invention**

La présente invention a pour objet de proposer un procédé de traitement de signaux de radionavigation, à l'aide duquel un récepteur GNSS (de « Global Navigation Satellite System » - abréviation utilisée ici pour désigner un système de navigation satellitaire fournissant une couverture globale de géopositionnement) peut augmenter la précision de la solution de positionnement.

**Description générale de l'invention**

Dans la suite, on présuppose un ensemble de satellites (par exemple les satellites d'une constellation de satellites de radionavigation qui sont « visibles » depuis le lieu géographique où se trouve le récepteur ou une partie de ceux-ci), dont les satellites émettent chacun au moins deux signaux de radionavigation dans des bandes de fréquence distinctes. Chaque satellite émet donc au moins un premier signal de radionavigation sur une première fréquence et un deuxième signal de radionavigation sur une deuxième fréquence distincte de la première. Le récepteur qui doit fixer sa position géographique reçoit les premier et deuxième signaux pour chaque satellite de l'ensemble considéré et effectue, aussi pour chaque satellite de l'ensemble, des mesures non différentiées de code et de phase de ces signaux. On note ici que le terme « mesure non différentiée » est utilisé dans ce contexte pour désigner une mesure élémentaire, qui n'est différentiée ni entre satellites ni entre récepteurs. Il est bien connu que les mesures de phase présentent chacune une ambiguïté entière à priori inconnue. Il en résulte que pour chaque satellite, la combinaison « widelane » des mesures de phase des premier et deuxième signaux présente aussi une ambiguïté entière à priori inconnue. Cette ambiguïté peut s'exprimer en cycles de la fréquence de différence des première et deuxième fréquences et est nommée ci-après première ambiguïté widelane (pour la distinguer d'une ou de plusieurs éventuelles autres ambiguïtés widelane survenant lorsqu'il y a plus de deux bandes de fréquences dans lesquelles les satellites émettent des signaux de radionavigation). Il faut noter aussi que pour chaque satellite de l'ensemble considéré l'on a une première ambiguïté widelane associée à ce satellite.

Selon l'invention, le procédé de traitement des signaux de radionavigation comprend en outre l'étape de déterminer les premières ambiguïtés widelane de manière cohérente sur l'ensemble de satellites. Le récepteur devant fixer sa position utilise, dans cette étape, des biais widelane, reçus d'un système de référence, associés aux satellites de l'ensemble de satellites. Le procédé comprend aussi l'étape de fixer ensuite la position du récepteur à l'aide des mesures de code et de phase premiers et deuxièmes signaux reçus ainsi que du jeu de premières ambiguïtés widelane déterminés de manière cohérente. L'action de fixer la position du récepteur comprend, pour chaque satellite de l'ensemble, la détermination d'une pseudo-distance au moyen d'une combinaison iono-free, optimisée en termes de bruit, des mesures de code et de la différence des mesures phase des premier et deuxième signaux, compensée de l'ambiguïté widelane. La détermination de la pseudo-distance reposant en outre sur des valeurs d'horloge de satellite, reçus d'un système de référence, associées à la combinaison iono-free. La combinaison iono-free est prédéterminée au sens que les coefficients des différents termes de la combinaison sont connus du côté du système de référence - la connaissance au niveau du système de référence des coefficients étant nécessaire pour que le système de référence puisse transmettre au récepteur les valeurs d'horloge de satellite associées à la combinaison optimale, à la cadence nécessaire. Les coefficients de la combinaison optimisée peuvent être convenus à l'avance entre le récepteur et le système de référence ou être fixés une fois pour toutes pour l'ensemble des satellites. Les valeurs numériques de ces coefficients sont de préférence choisies en fonction des caractéristiques de bruit des signaux de radionavigation.

Il sera apprécié que le procédé selon l'invention permet de s'affranchir de résolutions complexes en réseau pour identifier une partie des ambiguïtés élémentaires. La conséquence de la connaissance du jeu d'ambiguïtés widelane entières cohérentes est qu'on dispose directement au niveau récepteur d'une nouvelle observable non ambiguë (à savoir la différence entre les mesures de phase, compensée de l'ambiguïté widelane) en plus des deux mesures de code sur chaque fréquence. Une analyse des combinaisons de ces trois observables montre qu'il est possible de construire alors une combinaison donnant une pseudo-distance corrigée des effets ionosphériques (donc « iono-free ») moins bruitée que les combinaisons utilisant uniquement les mesures de code. De plus, cette combinaison elle est moins sensible aux multi-trajets du fait qu'elle repose sur des mesures de phase.

On peut généraliser le procédé pour des systèmes avec plus de fréquences, par exemple dans le cas de Galileo. Pour un système tri-fréquence, on pourra bloquer deux combinaisons widelane, et on disposera alors de cinq observables indépendantes (c.-à-d. deux combinaisons widelane et trois mesures de code) présentant des caractéristiques de bruit et de contributions ionosphériques assez différentes. Dans le cas tri-fréquence, chaque satellite de l'ensemble considéré émet un troisième signal de radionavigation sur une troisième fréquence distincte des première et deuxième fréquences. Optionnellement le procédé comprend donc, au niveau du récepteur et pour chaque satellite de l'ensemble, la réception du troisième signal ainsi que l'action d'effectuer des mesures non différentiées de code et de phase du troisième signal reçu. Comme la mesure de phase du troisième signal présente aussi une ambiguïté entière à priori inconnue, la combinaison widelane des mesures de phase des premier et troisième signaux présente une deuxième ambiguïté widelane entière à priori inconnue. (Notons que la combinaison widelane des mesures de phase des deuxième et troisième signaux présente aussi une ambiguïté widelane entière à priori inconnue mais que ce cas ne nécessite pas de discussion séparée puisqu'il suffit d'intervertir les dénominations des premiers et deuxièmes signaux.) Le récepteur détermine alors un jeu de deuxièmes ambiguïtés widelane cohérentes sur l'ensemble de satellites de sorte que l'action de fixer la position du récepteur repose aussi sur les mesures de code et de phase des troisièmes signaux ainsi que des deuxièmes ambiguïtés widelane déterminés de manière cohérente sur l'ensemble de satellites.

Comme indiqué ci-dessus, la détermination des premières et/ou deuxièmes ambiguïtés widelane de manière cohérente sur l'ensemble de satellites comprend la réception de biais widelane associés aux satellites de la part d'un système de référence (p.ex. un réseau de récepteurs de référence géographiquement fixes).

Avantageusement, le récepteur calcule une valeur estimée de la première ambiguïté widelane, pour chaque satellite de l'ensemble de satellites, selon l'équation :

$$\hat{N}_W = (\frac{P_2 - 2\gamma\hat{e}}{\lambda_2} - L_2) - (\frac{P_1 - 2\hat{e}}{\lambda_1} - L_1)$$

où

$\hat{N}_W$ désigne cette valeur estimée de la première ambiguïté widelane,

$P_1$ et $P_2$ les mesures de code des premier et deuxième signaux, respectivement,

$L_1$ et $L_2$ les mesures de phase des premier et deuxième signaux, respectivement,

$\lambda_1$ et $\lambda_2$ les longueurs d'onde des premier et deuxième signaux, respectivement,

$$\gamma = \frac{\lambda_2^2}{\lambda_1^2},$$

et ê une estimée de l'allongement ionosphérique pour le premier signal (exprimée par $\hat{e} = \frac{P_2 - P_1}{\gamma - 1}$ ) :

Pour chaque satellite, le récepteur utilise de préférence une modélisation de la première ambiguïté widelane, donnée par l'expression :

$$N_W = \hat{N}_W - d + \mu_{sat} - \mu_{rec}$$

où

$N_W$ désigne la première ambiguïté widelane,

d un terme de correction géométrique,

$\mu_{sat}$ le biais widelane associé au satellite respectif, transmis au récepteur par le système de référence,

et $\mu_{rec}$ le biais widelane associé au récepteur, commun à toutes les premières ambiguïtés widelane.

Le récepteur identifie alors un jeu de valeurs entières des premières ambiguïtés widelane qui sont en conformité avec cette modélisation pour l'ensemble de satellites. Cette identification des valeurs entières peut notamment être effectuée à l'aide de simples différences entre satellites des modélisations des premières ambiguïtés widelane ou par résolution simultanée des valeurs entières et du terme $\mu_{rec}$ avec une loi d'évolution adaptée dans le temps.

De préférence, la détermination éventuelle des deuxièmes ambiguïtés widelane de manière cohérente sur l'ensemble de satellites est effectuée de manière analogue à la détermination des premières ambiguïtés widelane.

Préférentiellement, les première, deuxième et, le cas échéant : troisième, fréquences sont choisies parmi les fréquences L1, L2, L5 et E6.

Avantageusement, parmi les mesures non différentiées de code, au moins une présente un bruit inférieur à 0,5 m, de préférence inférieur à 0,25 m. Au cas où chacune des mesures non différentiées de code présente un bruit supérieur à 0,5 m, la fixation de la position se fait de préférence à l'aide d'au moins trois fréquences (de sorte à avoir au moins deux observables de phase widelane).

Un aspect de l'invention concerne un récepteur GNSS comprenant des moyens pour la mise en oeuvre du procédé. De tels moyens comprennent avantageusement un programme, stocké dans une mémoire permanente ou non permanente du récepteur et configuré de telle sorte qu'il fait fonctionner le récepteur selon le procédé décrit lorsqu'il est exécuté dans récepteur.

**Brève description des dessins**

D'autres particularités et caractéristiques de l'invention ressortiront de la description détaillée d'un mode de réalisation avantageux présenté ci-dessous, à titre d'illustration, avec référence au dessin annexé :

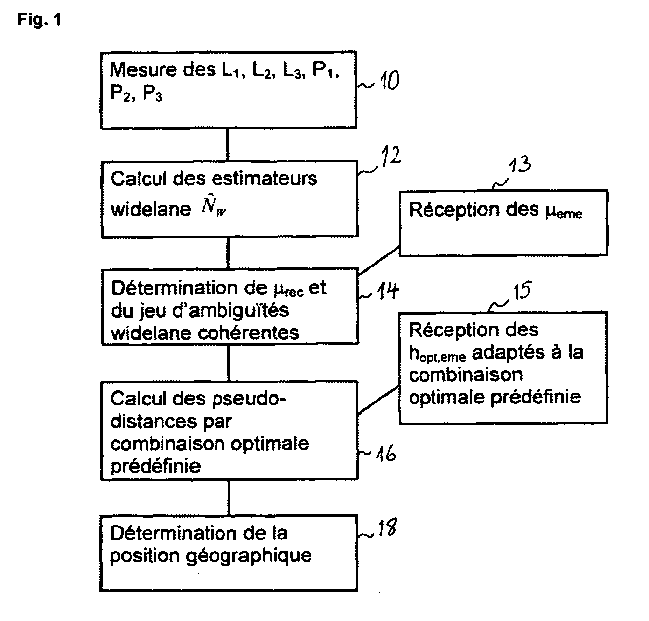

Fig. 1 : montre un organigramme d'un mode de réalisation préféré du procédé selon l'invention.

**Description d'une exécution préférée**

Pour chaque satellite visible depuis le récepteur, c.-à-d. pour chaque satellite au-dessus de l'horizon au lieu géographique du récepteur, on a au niveau de ce dernier (à l'étape 10 de la Fig. 1) au moins deux mesures de code (non ambiguës), notées $P_1$ et $P_2$, et au moins deux mesures de phase (ambiguës), notées $L_1$ et $L_2$, pour les fréquences $f_1$ et $f_2$, respectivement.

On utilisera en outre les notations suivantes :

$$\gamma = \frac{f_1^2}{f_2^2} = \frac{\lambda_2^2}{\lambda_1^2}, \quad \lambda_1 = \frac{c}{f_1}, \quad \lambda_2 = \frac{c}{f_2}$$

où $c$ représente la vitesse de la lumière. Pour les bandes L1 et L2 du système GPS, on a, par exemple : $f_1 = 154 f_0$ et $f_2 = 120 f_0$, où $f_0 = 10{,}23$ MHz. On utilisera aussi la convention selon laquelle les mesures de code $P_1$, $P_2$ sont exprimées en unités de longueur, tandis que les mesures de phase $L_1$, $L_2$ sont exprimées en cycles.

Les équations de modélisation des mesures de code et de phase (sans sauts de phase, mesures à gauche, modèles à droite) sont les suivantes :

$$\begin{aligned}
\lambda_1 L_1 &= (D_1 + \lambda_1 W) - e - \lambda_1 N_1 + (\Delta h + \Delta \tau_1) \\
\lambda_2 L_2 &= (D_2 + \lambda_2 W) - \gamma e - \lambda_2 N_2 + (\Delta h + \Delta \tau_{12} + \Delta \tau_2) \\
P_1 &= D_1 + e + (\Delta h) \\
P_2 &= D_2 + \gamma e + (\Delta h + \Delta \tau_{12})
\end{aligned} \qquad (1)$$

où

- $D_1$ et $D_2$ représentent les distances de propagation entre centres de phase, hors effets ionosphériques ;
- W la rotation de phase en fonction de l'orientation de la direction de propagation par rapport au dipôle de l'antenne (effet « windup ») ;
- e l'allongement ionosphérique à la fréquence $f_1$ ;
- $\Delta h = h_{rec} - h_{eme}$, la différence entre l'horloge du récepteur $h_{rec}$ et celle de l'émetteur $h_{eme}$ à chaque date ;
- $\Delta \tau_{12}$ la différence des biais inter-code entre récepteur et émetteur à chaque date ;
- $\Delta \tau_1, \Delta \tau_2$ les biais code-phase (différences entre le récepteur et l'émetteur à chaque date) pour $f_1$ et $f_2$, respectivement ; et
- $N_1, N_2$ les ambiguïtés de phase entières des deux porteuses, inconnues au départ et supposées invariantes au cours d'un passage donné du satellite considéré (c.-à-d. que l'on comptabilise les sauts de phase qui surviennent pendant un passage du satellite dans les mesures de phase $L_1$ et $L_2$).

On note que les biais $\Delta \tau_{12}, \Delta \tau_1, \Delta \tau_2$ peuvent varier en fonction du temps.

Notons ici qu'en cas de réception tri-fréquence, on a en outre, pour chaque satellite, la mesure de code $P_3$ et la mesure de phase $L_3$ à la troisième fréquence $f_3$ ainsi que les équations de modélisation suivantes :

$$\begin{aligned}
\lambda_3 L_3 &= (D_3 + \lambda_3 W) - \gamma' e - \lambda_3 N_3 + (\Delta h + \Delta \tau_{13} + \Delta \tau_3) \\
P_3 &= D_3 + \gamma' e + (\Delta h + \Delta \tau_{13})
\end{aligned}$$

où

$$\gamma' = \frac{f_1^2}{f_3^2} = \frac{\lambda_3^2}{\lambda_1^2}, \quad \lambda_3 = \frac{c}{f_3},$$

- $N_3$ représente l'ambiguïté de phase entière de la troisième porteuse, inconnue au départ et supposée invariante au cours d'un passage donné du satellite considéré ;
- $D_3$ la distance de propagation entre centres de phase, hors effets ionosphériques ; et
- $\Delta \tau_{13}$ la différence des biais inter-code entre récepteur et émetteur à chaque date pour les fréquences $f_1$ et $f_3$
- $\Delta \tau_3$ le biais code-phase pour $f_3$.

Comme les équations pour la paire de fréquences $(f_1, f_3)$ s'obtiennent directement des équations pour la paire $(f_1, f_2)$ par échange de l'indice « 2 » par l'indice « 3 », nous limiterons la discussion qui suivra à la paire de fréquences $(f_1, f_2)$ afin d'éviter des répétitions inutiles.

L'ambiguïté widelane (entière) est définie par $N_W = N_2 - N_1$. On peut construire l'estimateur widelane pour $N_W$

(étape 12) par les équations suivantes :
$$\hat{e} = \frac{P_2 - P_1}{\gamma - 1}$$
(estimation de l'allongement ionosphérique, hors biais systèmes)

$$\hat{N}_1 = \frac{P_1 - 2\hat{e}}{\lambda_1} - L_1 \qquad \hat{N}_2 = \frac{P_2 - 2\gamma\hat{e}}{\lambda_2} - L_2$$
et (estimation des ambiguïtés)

$\hat{N}_W = \hat{N}_1 - \hat{N}_2$ (estimation de l'ambiguïté widelane)

On peut construire les équations de mesure de cet estimateur à partir des équations (1), et on obtient une équation de la forme :

$$\hat{N}_W = N_2 - N_1 + d + \Delta\mu \qquad\qquad (2)$$

où d est une correction géométrique liée à l'écart entre $D_1$ et $D_2$ qui reste petite devant un cycle pour les antennes courantes et peut se calculer avec une bonne précision si nécessaire à l'aide des éphémérides radiodiffusées. W ne contribue plus dans cette équation. $\Delta\mu$ est une combinaison linéaire des différences récepteur-émetteur $\Delta\tau_{12}$, $\Delta\tau_1$, $\Delta\tau_2$ et est donc aussi une différence entre une valeur ne dépendant que du récepteur (notée $\mu_{rec}$) et une valeur ne dépendant que de l'émetteur (notée $\mu_{eme}$). On note :

$$\Delta\mu(t) = \mu_{rec}(t) - \mu_{eme}(t) \qquad\qquad (3)$$

où la dépendance du temps est indiquée explicitement.

La valeur de $\Delta\mu$ est commune à toutes les mesures effectuées à une même date sur les différents canaux du récepteur.

La valeur de $N_W = N_2 - N_1$ peut être identifiée par résolution de l'équation (2) sur une certaine durée pendant laquelle on dispose au moins de deux passages simultanés de satellites (étape 14). En notant $K_k$ l'entier à trouver, on peut reformuler l'équation (2) comme suit :

$$R_k(t) + \mu_{eme,k}(t) = K_k + \mu_{rec}(t) \qquad\qquad (4)$$

où

$R_k(t)$ représente le résidu associé à chaque mesure du passage k, sachant que d'après (2), on a $R_k(t) = \hat{N}_W(t) - d(t)$.

$\mu_{eme,k}(t)$ le biais widelane du satellite du passage k devant être fourni au récepteur pour déterminer la position (étape 13), et

$\mu_{rec}(t)$ le biais widelane du récepteur (inconnu, donc à déterminer lors de la recherche de $K_k$).

On note que l'équation (4) représente en fait un système d'équations, qui peut être résolu, par exemple, par la technique des moindres carrés. Cette méthode de résolution n'est pas détaillée ici. Il est important de noter que la solution du système (4) n'est pas unique, mais qu'il y a une famille de solutions qui se déduisent les unes des autres par la transformation entière $[\mu_{rec}(t), K_k] \leftrightarrow [\mu_{rec}(t) + n, K_K - n]$, pour tout n entier.

Une autre possibilité simple de résolution du système (4), et qui se prête bien à l'illustration du concept, est la construction de simples différences entre mesures associées à différents passages, ce qui permet d'éliminer directement la contribution de $\mu_{rec}(t)$ et d'obtenir des équations de la forme :

$$(R_b(t) + \mu_{eme,b}(t)) - (R_a(t) + \mu_{eme,a}(t)) = K_b(t) - K_a(t)$$

pour des passages a et b. Par calcul de la moyenne sur l'intervalle de temps commun aux passages a et b, on trouve $K_b - K_a$. On procède alors itérativement, en choisissant d'autres couples de passages qui se recouvrent bien dans le temps, ce qui fournit d'autres valeurs $K_b - K_a$. Cette méthode fonctionne bien lorsqu'il y a un bon recouvrement dans le temps des passages considérés. De cette manière, on a finalement déterminé les ambiguïtés widelane associées aux passages de satellite de manière cohérente sur l'ensemble des satellites, à un entier commun près. En effet, sur tous les passages, une ambiguïté widelane reste inconnue, mais toutes les autres ambiguïtés widelane découlent directement ou indirectement dès qu'elle est fixée - d'où l'appellation de détermination cohérente sur l'ensemble de satellites. Notons qu'en présence de bruits importants sur les mesures, il est préférable de résoudre le système (4) directement (sans la différentiation entre passages), par exemple à l'aide de la technique des moindres carrés, car le bruit est plus élevé (de l'ordre de 1,4 fois plus élevé) sur les équations en simples différences.

Les valeurs $\mu_{eme}$ méritent une explication, car sans connaissance de ces valeurs, le récepteur ne saura pas accéder à la solution cohérente des ambiguïtés widelane. Les valeurs $\mu_{eme}$ sont déterminées de préférence au niveau d'un réseau de récepteurs de référence. On utilise la propriété que, dans la pratique, les $\mu_{eme}$ sont des fonctions lentement variables du temps. La technique de détermination des $\mu_{eme}$ au niveau d'un réseau de référence a fait l'objet de la demande de brevet enregistrée sous le numéro FR 0754139. Cette méthode utilise aussi les équations du système (4). De préférence, le processus de détermination des $\mu_{eme}$ démarre avec le choix d'une première station du réseau de référence dont les valeurs de $\mu_{rec}$ (notées ci-après $\mu_{rec,ref}$) sont stables dans le temps. Pour cette station, on fixe $\mu_{rec,ref}$ de façon arbitraire, p.ex. on pose $\mu_{rec,ref} = 0$. On parcourt ensuite les passages des satellites en visibilité de cette station. Pour chaque passage, on a $R_k = K_k - \mu_{eme}$, par définition de la première station. On décompose alors $R_k$ en une quantité entière arbitraire (p.ex. l'entier le plus proche), qui donne $K_k$, et une quantité pas nécessairement entière correspondant à la différence $R_k - K_k$ qui donne $\mu_{eme}$. Cela fournit les $\mu_{eme}$ des satellites en visibilité de la première station.

Pour les satellites dont on connaît maintenant les délais internes $\mu_{eme}$ on estime les délais $\mu_{rec,ref}$ des autres stations. Cette fois-ci, dans l'équation $R_k(t) = K_k + \mu_{rec,ref}(t) - \mu_{eme.k}(t)$, la valeur de $\mu_{eme,k}$ est connue. On décompose alors $R_k(t) + \mu_{eme,k}(t)$ en un nombre entier arbitraire (de la nouvelle station) et le délai de station $\mu_{rec,ref}$ correspondant. On répète ces étapes pour tous les satellites de la constellation et toutes les stations du réseau de référence. On obtient finalement des valeurs $\mu_{eme}$ cohérentes sur tout le réseau de référence, qui peuvent être considérées comme constantes sur au moins une journée.

Les $\mu_{eme}$ peuvent être communiqués au récepteur devant déterminer sa position par tout moyen convenable, par exemple dans le message de navigation de la constellation de satellites considérée, par diffusion terrestre ou à partir d'un satellite SBAS, par Intenet, par radiotéléphonie mobile, etc. Etant donné le faible taux de changement des $\mu_{eme}$, peu de bande passante est nécessaire pour acheminer leurs valeurs au récepteur devant fixer sa position.

Lorsque la valeur de l'ambiguïté widelane est connue, on peut construire à partir des équations de phase dans (1), une nouvelle équation, homogène à une pseudo-distance :

$$L_2 - L_1 + N_W = \left(\frac{D_2}{\lambda_2} - \frac{D_1}{\lambda_1}\right) - \left(\frac{\gamma}{\lambda_2} - \frac{1}{\lambda_1}\right)e + \left(\frac{1}{\lambda_2} - \frac{1}{\lambda_1}\right)(\Delta h + \Delta\tau_W) \qquad (5)$$

où $\Delta\tau_w$ est une grandeur similaire à un TGD (de « time group delay »), car c'est une combinaison linéaire de $\Delta\tau_{12}$, $\Delta\tau_1$, $\Delta\tau_2$. Cette nouvelle combinaison a un bruit de mesure très intéressant valant un peu moins de deux fois le bruit de phase (donc typiquement 5 mm), à comparer avec le bruit de code (typiquement de quelques dizaines de centimètres).

On dispose des mesures non ambiguës suivantes (après blocage de la combinaison widelane, en notation classique Rinex, jeu de mesures à une date):

$$L_2 - L_1 + N_w = D\left(\frac{1}{\lambda_2} - \frac{1}{\lambda_1}\right) - e\left(\frac{\gamma}{\lambda_2} - \frac{1}{\lambda_1}\right) + (k + \Delta h + \Delta\tau_w)\left(\frac{1}{\lambda_2} - \frac{1}{\lambda_1}\right)$$
$$P_1 = D + e + (\Delta h + \Delta\tau) \qquad (6)$$
$$P_2 = D + \gamma e + (\Delta h + \gamma\Delta\tau)$$

où $D$ et $e$ sont respectivement la pseudo-distance modélisable (y compris l'allongement troposphérique), et l'allongement ionosphérique sur la première fréquence. $\Delta h$ est ici la différence entre horloge récepteur et horloge émetteur, référencée à la combinaison de pseudo-distances « iono-free » (sans contribution ionosphérique) $(\gamma P_1 - P_2)/(\gamma - 1)$ ; $\Delta\tau$ correspond ici au 'TGD' entre récepteur et émetteur, car les équations sont référencées à la combinaison iono-free, contrairement aux équations (1). Ceci ne change pas la généralité, mais référence les équations (6) relativement à ce qui est habituellement utilisé dans le système GPS.

L'équation de l'observable widelane est particulière parce que l'ensemble des ambiguïtés widelane est déterminé à un entier près (noté n).

On a négligé les contributions de corrections telles que l'écart des centres de phase, sachant que l'objectif est ici d'analyser les bruits de combinaisons idéales. De toute façon, on peut toujours supposer que ces corrections ont été appliquées avant la génération des équations ci-dessus, car ces corrections sont calculables au niveau récepteur avec une précision suffisante. L'effet windup (qui nécessiterait la connaissance ou la modélisation de l'attitude des satellites) n'a pas à être pris en compte, car il est éliminé dans la combinaison widelane (voir équation (5)).

Dans le cas de trois observables, on dispose donc de trois coefficients pour construire une combinaison des équations (6) éliminant le terme ionosphérique (étape 16). En notant $P_{opt}$ la combinaison optimale des observables des équations (6) et $a_w$, $a_1$ et $a_2$ les coefficients de cette combinaison, on obtient :

$$P_{opt} = a_W(L_2 - L_1 + N_W) + a_1 P_1 + a_2 P_2. \qquad (7)$$

On demande que le coefficient de D soit 1 et que celui de e disparaisse. On obtient les contraintes :

$$\begin{aligned} \left(\frac{1}{\lambda_2} - \frac{1}{\lambda_1}\right)a_W + a_1 + a_2 &= 1 \\ -\left(\frac{\gamma}{\lambda_2} - \frac{1}{\lambda_1}\right)a_W + a_1 + \gamma a_2 &= 0 \end{aligned} \qquad (8)$$

Il y a deux équations de contrainte, donc il reste une infinité de combinaisons possibles, parmi lesquelles on peut choisir avec un critère supplémentaire tel que la minimisation du bruit ou la robustesse des résultats.

Tous les termes d'horloge ainsi que les termes $\Delta\tau$ et $\Delta\tau_w$ des équations (6) se regroupent en un terme que l'on peut appeler « horloge associée à la combinaison » dans le cadre de l'utilisation d'une combinaison donnée de ces observables. Ce terme d'horloge est noté $\Delta h_{opt}$ et on a alors $P_{opt} = D + \Delta h_{opt}$. On remarque que la partie horloge récepteur du terme $\Delta h_{opt}$ est ambiguë (à cause de l'entier inconnu n), mais cela ne limite pas la résolution d'un problème de positionnement, puisque dans ce cas, l'horloge récepteur est supposée inconnue et est résolue à chaque date. Pour déduire la pseudo-distance D de la combinaison $P_{opt}$ (étape 16), le récepteur a besoin de connaître la partie horloge émetteur du terme $\Delta h_{opt}$, que l'on notera $h_{opt,eme}$. Les valeurs des $h_{opt,eme}$ sont de préférence calculées au niveau d'un système de référence et transmises au récepteur (étape 15). La détermination de la position géographique du récepteur (étape 18) se fait finalement grâce aux jeu de pseudo-distances calculées. On note que la combinaison qui est utilisée dans le récepteur doit être fixée à l'avance (par exemple par convention, ou par définition d'un protocole) pour que les valeurs $h_{opt,eme}$ soient consistantes avec la combinaison. La détermination des $h_{opt,eme}$ peut se faire de façon classique au niveau du réseau de référence grâce au système d'équations (6). Notons qu'au niveau du réseau de référence, les positions des récepteurs de référence (donc aussi le pseudo-distances) étant connus, le système (6) est alors résolu pour les inconnues $h_{opt,eme}$, $h_{opt,rec}$ etc.

La formulation théorique du problème de la construction des combinaisons linéaires de plusieurs observables éliminant l'effet ionosphérique est détaillée ci-dessous. Elle se généralise directement à un nombre quelconque d'observables.

On note x le vecteur des coefficients de la combinaison des trois observables (widelane, code 1 et code 2), A et B les matrices des coefficients des équations (6), de façon à avoir :

$$B\begin{bmatrix} L_1 \\ L_2 \\ P_1 \\ P_2 \end{bmatrix} = A\begin{bmatrix} D \\ e \end{bmatrix}, \text{ et} \qquad (9)$$

$$x'A = \begin{bmatrix} 1 & 0 \end{bmatrix} \qquad (10)$$

On obtient D par :

$$D = x' B \begin{bmatrix} L_1 \\ L_2 \\ P_1 \\ P_2 \end{bmatrix} \qquad (11)$$

En notant P la matrice de corrélation des bruits des quatre mesures brutes code et phase, le bruit correspondant à cette solution est donné par $\sqrt{x' B P B' x}$ .

Pour chaque définition des bruits P, on peut ainsi trouver les coefficients de la combinaison optimale x et le bruit sur la solution (c.-à-d. sur la valeur de D) associée. Dans la suite, nous allons illustrer l'ordre de grandeur des bruits optimums pour différents cas de bruits de mesure.

**Exemple 1 : cas de GPS (bi-fréquence)**

Le tableau ci-dessous montre l'ordre de grandeur des bruits optimums dans le cas de GPS en mode bi-fréquence (unités en mètres, fréquences 1 et 2 respectivement de 1575,42 MHz et 1227,60 MHz) :

| Bruits phase 1, 2 (m) | Bruits code 1, 2 (m) | Bruit résultant (m) |
|---|---|---|
| Inf ; Inf | 1,0; 1,0 | 2,97 |
| 0,01 ; 0,01 | 1,0 ; 1,0 | 2,78 |
| 0,01 ; 0,01 | 1,0 ; 0,1 | 0,36 |
| 0,01 ; 0,01 | 0,1 ; 1,0 | 0,45 |
| 0,01 ; 0,01 | 0,1 ; 0,1 | 0,28 |

La première ligne de ce tableau (bruits phase supposés infinis) correspond au cas classique de la combinaison iono-free de code. On remarque que l'utilisation de la combinaison de phase widelane n'est intéressante que si au moins une des mesures de code a un bruit faible. Or, les trois dernières lignes du tableau sont des cas hypothétiques, car le bruit des mesures de code des signaux GPS est de l'ordre du mètre. On voit aussi que si on suppose que les deux mesures de code ont un bruit de 10 cm, on arrive à un bruit de 30 cm sur la combinaison iono-free de code, ce qui montre que l'apport de la combinaison de phase widelane n'est pas significatif si les deux mesures de code sont bonnes (dernière ligne du tableau). A titre indicatif, si on effectuait une résolution complète des ambiguïtés, le bruit résultant serait de 3 cm, avec les hypothèses retenues.

**Exemple 2 : cas de GPS (tri-fréquence)**

Pour le cas GPS tri-fréquence, on disposera des fréquences L1, L2 et L5. On peut alors adapter les systèmes d'équations (6)-(11) et on arrive au tableau de bruits suivant (unités de nouveau en mètres, fréquences 1, 2 et 3 de 1575,42 MHz, 1227,60 MHz et 1176,45 MHz, respectivement) :

| Bruits phase 1, 2, 3 (m) | Bruits code 1, 2, 3 (m) | Bruit résultant (m) |
|---|---|---|
| Inf ; Inf ; Inf | 1,0 ; 1,0 ; 1,0 | 2,54 |
| 0,01 ; 0,01 ; 0,01 | Inf ; Inf ; Inf | 0,27 |
| 0,01 ; 0,01 ; 0,01 | 1,0 ; 1,0 ; 1,0 | 0,27 |
| 0,01 ; 0,01 ; 0,01 | 1,0 ; 1,0 ; 0,1 | 0,20 |
| 0,01 ; 0,01 ; 0,01 | 1,0; 0,1 ; 0,1 | 0,18 |
| 0,01 ; 0,01 ; 0,01 | 0,1 ; 0,1 ; 0,1 | 0,16 |

Le comportement est cohérent avec celui de l'exemple 1 : ce sont les deux combinaisons les moins bruitées qui contribuent essentiellement à la performance. La première ligne du tableau montre que l'ajout de la troisième fréquence n'apporte pas grand-chose au bruit résultant obtenue par la combinaison iono-free de code (ce qui ne diminue pas l'intérêt de trois fréquences, pour des raisons de robustesse, multi-trajets, etc.).

Par contre, on a directement une performance de 27 cm si on utilise uniquement les mesures de phase en combinaisons widelane (deuxième ligne du tableau). Ensuite, une mesure de code de très bonne qualité permettrait de gagner un peu en termes de bruit résultant. Ensuite, une réduction du bruit sur les autres mesures de code n'apporterait qu'une amélioration marginale au bruit résultant.

Par rapport au cas standard (combinaison iono-free de code) on a donc un gain de facteur 10 en bruit en utilisant les combinaisons de phase widelane, et un faible gain supplémentaire en rajoutant une mesure de code plus performante. L'intérêt des combinaisons de phase widelane vient du fait que les données ne dépendent que de la phase et sont ainsi moins sujettes à des problèmes de multi-trajets que les mesures de code.

### Exemple 3 : cas de Galileo (tri-fréquence)

On répète l'analyse des performances pour le cas du futur système Galileo. Les fréquences 1, 2 et 3 utilisées dans le tableau suivant sont donc maintenant 1575,42 MHz, 1176,45 MHz et 1278,75 MHz, respectivement.

| Bruits phase 1, 2, 3 (m) | Bruits code 1, 2, 3 (m) | Bruit résultant (m) |
|---|---|---|
| Inf ; Inf ; Inf | 1,0 ; 1,0 ; 1,0 | 2,66 |
| 0,01 ; 0,01 ; 0,01 | Inf ; Inf ; Inf | 0,19 |
| 0,01 ; 0,01 ; 0,01 | 1,0; 1,0 ; 1,0 | 0,19 |
| 0,01 ; 0,01 ; 0,01 | 1,0 ; 1,0; 0,1 | 0,16 |
| 0,01 ; 0,01 ; 0,01 | 1,0 ; 0,1 ; 0,1 | 0,15 |
| 0,01 ; 0,01 ; 0,01 | 0,1 ; 0,1 ; 0,1 | 0,14 |

Comme pour GPS tri-fréquence, l'apport significatif provient des deux combinaisons de phase widelane. On gagne ici plus d'un facteur 10 sur le bruit résultant.

Les exemples qui précèdent montrent que grâce à l'utilisation des ambiguïtés widelane cohérentes dans un récepteur tri-fréquence il est possible des construire une pseudo-distance iono-free dont le bruit est amélioré d'un facteur 10 par rapport à la pseudo-distance iono-free obtenue par combinaisons de mesures de code uniquement.

L'utilisation de cette capacité repose sur la disponibilité, au niveau du récepteur, de différentes données, à savoir les biais widelane des satellites (les valeurs des $\mu_{eme}(t)$) ainsi que des données horloges de satellites associées à la combinaison optimale utilisée au niveau du récepteur. Les biais widelane $\mu_{eme}$ sont calculés pour la ou les combinaisons widelane utilisées et pour tous les satellites de la constellation au niveau d'un système de référence. D'autre part, le système de référence détermine les horloges $h_{opt,eme}$ pour la combinaison optimale choisie et aux éphémérides dont dispose le récepteur devant fixer sa position. De préférence, les données dont le récepteur a besoin sont communiquées régulièrement depuis le système de référence selon un protocole prédéfini. En principe, toutes les voies de communication pourront être utilisées, à condition que leur bande passante convienne. Le récepteur possède de préférence une mémoire pour y stocker les données communiquées par le système de référence entre les différentes mises à jour.

Il n'est en théorie pas nécessaire de disposer de nouvelles éphémérides pour utiliser le procédé selon l'invention, c.-à-d. que l'on pourrait utiliser les éphémérides standard diffusées par les satellites dans le message de navigation. Toutefois, on note d'une part que leur performance va limiter l'intérêt de la méthode, d'autre part que les horloges associées à la combinaison optimale devraient alors être calculées à partir de ces éphémérides. Pour que l'utilisateur puisse pleinement bénéficier de la performance du procédé (typiquement pour avoir mieux que 10 centimètres de précision sur la mesure), on prévoit donc de préférence une mise à jour d'éphémérides plus précise.

D'autre part, une diffusion des horloges correspondant à la combinaison utilisée est nécessaire dans le cas général. Cependant, ces horloges pourraient aussi être obtenues par une correction par rapport à des horloges de référence (de façon similaire au biais inter-fréquence ('TGD') de GPS, qui permet d'obtenir des horloges adaptées à la première fréquence à partir des horloges de référence issues de la combinaison iono-free). Dans la plupart des cas, ces corrections seront constantes ou lentement variables. La méthode est donc compatible avec des horloges plus précises, obtenues par exemple par blocage complet des ambiguïtés entières au niveau système.

**Revendications**

1. Procédé de traitement de signaux de radionavigation provenant d'un ensemble de satellites, dont chaque satellite diffuse au moins un premier signal de radionavigation sur une première fréquence et un deuxième signal de radionavigation sur une deuxième fréquence distincte de la première, le procédé comprenant, au niveau du récepteur, les actions de :

    a) recevoir, pour chaque satellite dudit ensemble, lesdits premier et deuxième signaux;

    b) effectuer, pour chaque satellite dudit ensemble, des mesures non différentiées de code et de phase desdits premiers et deuxièmes signaux reçus (10), ladite mesure de phase du premier signal et ladite mesure de phase du deuxième signal présentant chacune une ambiguïté entière à priori inconnue, de sorte que la combinaison widelane des mesures de phase des premier et deuxième signaux présente aussi une première ambiguïté widelane entière à priori inconnue ;

    c) déterminer les premières ambiguïtés widelane de manière cohérente sur l'ensemble de satellites en utilisant des biais widelane, reçus d'un système de référence, associés aux satellites dudit ensemble de satellites (12, 13, 14), et

    d) fixer la position du récepteur (18) à l'aide desdites mesures de code et de phase des premiers et deuxièmes signaux reçus ainsi que des premières ambiguïtés widelane déterminés de manière cohérente sur l'ensemble de satellites,

    **caractérisé en ce que**
    l'action de fixer la position du récepteur comprend pour chaque satellite dudit ensemble de satellites, la détermination (16) d'une pseudo-distance au moyen d'une combinaison iono-free desdites mesures de code et de la différence des mesures phase des premier et deuxième signaux, compensée de l'ambiguïté widelane, ladite combinaison iono-free étant optimisée en termes de bruit, la détermination de la pseudo-distance reposant en outre sur des valeurs d'horloge de satellite, reçus d'un système de référence, associées à ladite combinaison iono-free.

2. Procédé selon la revendication 1, dans lequel la détermination des premières ambiguïtés widelane de manière cohérente sur l'ensemble de satellites comprend :

    réception de biais widelane associés aux satellites dudit ensemble de satellites de la part d'un système de référence (13) ;
    pour chaque satellite dudit ensemble de satellites, calcul d'une valeur estimée de la première ambiguïté widelane (12) selon l'équation :

$$\hat{N}_W = (\frac{P_2 - 2\gamma\hat{e}}{\lambda_2} - L_2) - (\frac{P_1 - 2\hat{e}}{\lambda_1} - L_1)$$

où $\hat{N}_W$ désigne ladite valeur estimée de la première ambiguïté widelane,
$P_1$ et $P_2$ désignent les mesures de code des premier et deuxième signaux, respectivement,
$L_1$ et $L_2$ désignent les mesures de phase des premier et deuxième signaux, respectivement,
$\lambda_1$ et $\lambda_2$ désignent les longueurs d'onde des premier et deuxième signaux, respectivement,

$$\gamma = \frac{\lambda_2^2}{\lambda_1^2},$$

et ê une estimée de l'allongement ionosphérique à prendre en compte pour le premier signal ;
pour chaque satellite dudit ensemble de satellites, modélisation de la première ambiguïté widelane par

$$N_W = \hat{N}_W - d + \mu_{sat} - \mu_{rec}$$

où $N_W$ désigne la première ambiguïté widelane,

d désigne un terme de correction géométrique,

$\mu_{sat}$ désigne le biais widelane associé au satellite respectif,

$\mu_{rec}$ désigne le biais widelane associé au récepteur, commun à toutes les premières ambiguïtés widelane ;

et identifier un jeu de valeurs entières des premières ambiguïtés widelane qui sont en conformité avec ladite modélisation pour l'ensemble de satellites (14).

3. Procédé selon la revendication 2, dans lequel l'identification desdites valeurs entières (14) est réalisée à l'aide de simples différences, entre satellites, des modélisations des premières ambiguïtés widelane.

4. Procédé selon l'une quelconque des revendications 1 à 3, dans lequel lesdites première et deuxième fréquences sont choisies parmi les fréquences L1, L2, L5 et E6.

5. Procédé selon l'une quelconque des revendications 1 à 4, dans lequel chaque satellite dudit ensemble diffuse au un troisième signal de radionavigation sur une troisième fréquence distincte des première et deuxième fréquences, dans lequel,

pour chaque satellite dudit ensemble, ledit troisième signal est également reçu;

des mesures non différentiées de code et de phase dudit troisième signal reçu sont effectuées pour chaque satellite dudit ensemble, ladite mesure de phase du troisième signal présentant une ambiguïté entière à priori inconnue, de sorte que la combinaison widelane des mesures de phase des premier et troisième signaux présente une deuxième ambiguïté widelane entière à priori inconnue ;

les deuxièmes ambiguïtés widelane sont déterminées de manière cohérente sur l'ensemble de satellites ; et

l'action de fixer la position du récepteur se fait aussi à l'aide des mesures de code et de phase des troisièmes signaux ainsi que des deuxièmes ambiguïtés widelane déterminés de manière cohérente sur l'ensemble de satellites.

6. Procédé selon la revendication 5, dans lequel la détermination des deuxièmes ambiguïtés widelane de manière cohérente sur l'ensemble de satellites est effectuée de manière analogue à la détermination des premières ambiguïtés widelane de manière cohérente sur l'ensemble de satellites.

7. Procédé selon la revendication 5 ou 6, dans lequel ladite troisième fréquence est choisie parmi les fréquences L1, L2, L5 et E6.

8. Procédé selon l'une quelconque des revendications 1 à 7, dans lequel parmi lesdites mesures non différentiées de code au moins une présente un bruit inférieur à 0,5 m, de préférence inférieur à 0,25 m.

9. Procédé selon l'une quelconque des revendications 5 à 7, dans lequel chacune desdites mesures non différentiées de code présente un bruit supérieur à 0,5 m.

10. Récepteur GNSS, **caractérisé par** des moyens configurés pour la mise en oeuvre du procédé selon l'une quelconque des revendications 1 à 9.

11. Récepteur GNSS selon la revendication 10. les moyens pour la mise en oeuvre du procédé comprenant un programme, stocké dans une mémoire du récepteur, configuré de sorte à faire fonctionner le récepteur selon le procédé lorsque le programme est exécuté dans le récepteur.

**Claims**

1. Method for treating radionavigation signals that originate from a group of satellites, in which each satellite broadcasts at least a first radionavigation signal on a first frequency and a second radionavigation signal on a second frequency that is different from the first, said method comprising,

at the level of a receiver, the actions of:

a) receiving, for each satellite of said group, said first and second signals;

b) executing, for each satellite of said group, the non-differentiated measurements of code and phase of said first and second received signals (10), said measurement of phase of the first signal and said measurement of phase of the second signal each having an a *priori* unknown integer ambiguity, such that the widelane combination of the measurements of phase of the first and second signals also has an a *priori* unknown first widelane integer ambiguity;

c) determining the first widelane ambiguities in a coherent manner for the group of satellites by using widelane biases, received from a reference system, associated with the satellites of said group of satellites (12, 13, 14), and

d) fixing the position of the receiver (18) with the help of said measurements of code and phase of the first and second received signals as well as of the first widelane ambiguities determined in a coherent manner on the group of satellites,

**characterised in that**

the action of fixing the position of the receiver comprises, for each satellite of said group of satellites, the determination (16) of a pseudo distance by means of an ionosphere-free combination of said measurements of code and of the difference of the measurements of phase of the first and second signals, compensated by the widelane ambiguity, said combination being optimised in terms of noise, the determination of the pseudo distance also depending on the satellite clock values, received from a reference system, associated with said ionosphere-free combination.

2. Method according to claim 1, wherein the determination of the first widelane ambiguities in a coherent manner on the group of satellites comprises:

receiving widelane biases associated with the satellites of said group of satellites from a reference system (13); for each satellite of the group of satellites, calculation of an estimated value for the first widelane ambiguity (12) according to the equation:

$$\hat{N}_W = (\frac{P_2 - 2\gamma\hat{e}}{\lambda_2} - L_2) - (\frac{P_1 - 2\hat{e}}{\lambda_1} - L_1)$$

where $\hat{N}_{W}$, designates said estimated value of the first widelane ambiguity,
$P_1$ and $P_2$ designate the measurements of code of the first and second signals, respectively,
$L_1$ and $L_2$ designate the measurements of phase of the first and second signals, respectively,
$\lambda_1$ and $\lambda_2$ designate the wavelengths of the first and second signals, respectively,

$$\gamma = \frac{\lambda_2^2}{\lambda_1^2},$$

and ê designates an estimate of the ionospheric delay to be taken into consideration for the first signal;
for each satellite of said group of satellites, establishment of a model for the first widelane ambiguity by

$$N_W = \hat{N}_W - d + \mu_{sat} - \mu_{rec}$$

where $N_W$ designates the first widelane ambiguity,
*d designates a geometric correction term,*
$\mu_{sat}$ designates the widelene bias associated with the respective satellite,
$\mu_{rec}$ designates the widelane bias associated with the receiver, common to all the first widelane ambiguities;
and identifying a set of integer values of the first widelane ambiguities that conform to said model for the group of satellites (14).

3. Method according to claim 2, wherein the identification of said integer values (14) is accomplished with the help of simple differences between satellites from the models of the first widelane ambiguities.

4. Method according to any one of claims 1 to 3, wherein said first and second frequencies are selected among the frequencies L1, L2, L5 and E6.

5. Method according to any one of claims 1 to 4, wherein each satellite of said group broadcasts a third radionavigation signal on a third frequency distinct from the first and second frequencies,
wherein,
for each satellite of said group, said third signal is also received;
the non-differentiated measurements of code and phase of said third received signals are executed for each satellite of said group, said measurement of phase of the third signal having an a *priori* unknown integer ambiguity, such that the widelane combination of the measurements of phase of the first and third signals has a second a *priori* unknown widelane integer ambiguity;

the second widelane ambiguities are determined in a coherent manner on the group of satellites, and

the action of fixing the position of the receiver is made with the help of the measurements of code and phase of the third signals as well as the second widelane ambiguities determined in a coherent manner on the group of satellites.

6. Method according to claim 5, wherein the determination of the second widelane ambiguities in a coherent manner on the group of satellites is effected in an analogous manner to the determination of the first widelane ambiguities in a coherent manner on the group of satellites.

7. Method according to claim 5 or 6, wherein said third frequency is selected among the frequencies L1, L2, L5 and E6.

8. Method according to any one of claims 1 to 7, wherein among said non-differentiated measurements of code at least one has a noise less than 0.5 m, preferably less than 0.25 m.

9. Method according to any one of claims 5 to 7, wherein each of said non-differentiated measurements of code has a noise greater than 0.5 m.

10. GNSS receiver, **characterised by** the means configured for implementing the method according to any one of claims 1 to 9.

11. GNSS receiver according to claim 10, the means for implementing the method comprising a program, stored in a memory of the receiver, set up in such a way to operate the receiver according to the method when the program is executed in the receiver.

**Patentansprüche**

1. Gruppe von Satelliten kommen, bei der jeder Satellit mindestens ein erstes Funknavigationssignal auf einer ersten Frequenz und ein zweites Funknavigationssignal auf einer zweiten, von der ersten verschiedenen Frequenz überträgt, wobei das Verfahren empfängerseitig folgende Schritte umfasst:

a) Empfang des ersten und zweiten Signals für jeden Satelliten der Satellitengruppe;

b) Durchführung nicht differenzierter Code- und Phasenmessungen der ersten und zweiten empfangenen Signale für jeden Satelliten der Satellitengruppe (10), wobei die Phasenmessung des ersten Signals und die Phasenmessung des zweiten Signals jeweils eine a priori unbekannte ganzzahlige Mehrdeutigkeit aufweisen, so dass die Widelane-Kombination der Phasenmessungen des ersten und zweiten Signals ebenfalls eine priori unbekannte ganzzahlige erste Widelane-Mehrdeutigkeit aufweist;

c) kohärente Bestimmung der ersten Widelane-Mehrdeutigkeiten an der Satellitengruppe, unter Verwendung von von einem Referenzsystem empfangenen, den Satelliten der Satellitengruppe zugeordneten Widelane-Biases (12, 13, 14), und

d) Festlegung der Position des Empfängers (18) mit Hilfe der Code- und Phasenmessungen der ersten und zweiten empfangenen Signale sowie der in kohärenter Weise an der Satellitengruppe bestimmten ersten Widelane-Mehrdeutigkeiten,

**dadurch gekennzeichnet, dass**

das Festlegen der Position des Empfängers für jeden Satelliten der Satellitengruppe die Bestimmung (16) einer Pseudoentfernung mittels einer ionosphärenfreien Kombination der Codemessungen und der mit der Widelane-Mehrdeutigkeit ausgeglichenen Differenz der Phasenmessungen des ersten und zweiten Signals umfasst, welche ionosphärenfreie Kombination rauschmäßig optimiert ist, wobei die Bestimmung der Pseudoentfernung zusätzlich auf von einem Referenzsystem empfangenen, der ionosphärenfreien Kombination zugeordneten Satellitenuhrwerten beruht.

2. Verfahren nach Anspruch 1, bei dem die kohärente Bestimmung der ersten Widelane-Mehrdeutigkeiten an der Satellitengruppe umfasst:

Empfang von den Satelliten der Satellitengruppe zugeordneten Widelane-Blases seitens eines Referenzsystems (13);

für jeden Satelliten der Satellitengruppe Berechnung eines geschätzten Wertes der ersten Widelane-Mehrdeutigkeit (12) gemäß der Gleichung:

$$\hat{N}_W = \left(\frac{P_2 - 2\gamma\hat{e}}{\lambda_2} - L_2\right) - \left(\frac{P_1 - 2\hat{e}}{\lambda_1} - L_1\right)$$

worin $\hat{N}_W$ den geschätzten Wert der ersten Widelane-Mehrdeutigkeit bezeichnet,
$P_1$ und $P_2$ die Codemessungen des ersten bzw. zweiten Signals bezeichnen,
$L_1$ und $L_2$ die Phasenmessungen des ersten bzw. zweiten Signals bezeichnen,
$\lambda_1$ und $\lambda_2$ die Wellenlängen des ersten bzw. zweiten Signals bezeichnen,

$$\gamma = \frac{\lambda_2^2}{\lambda_1^2},$$

und $\hat{e}$ eine beim ersten Signal zu berücksichtigende Schätzung der Ausdehnung der Ionosphäre ist;
für jeden Satelliten der Satellitengruppe Modellierung der ersten Widelane-Mehrdeutigkeit durch

$$N_W = \hat{N}_W - d + \mu_{sat} - \mu_{rec}$$

worin $N_W$ die erste Widelane-Mehrdeutigkeit bezeichnet, d einen geometrischen Korrekturterm bezeichnet,
$\mu_{sat}$ den dem jewelligen Satelliten zugeordneten Widelane-Bias bezeichnet,
$\mu_{rec}$ den dem Empfänger zugeordneten Widelane-Bias bezeichnet, der allen ersten Widelane-Mehrdeutigkeiten gemein ist;
und Ermittlung eines Satzes von ganzzahligen Werten der ersten Widelane-Mehrdeutigkeiten, die mit der Modellierung für die Satellitengruppe übereinstimmen (14).

3.  Verfahren nach Anspruch 2, bei dem die Ermittlung der ganzzahligen Werte (14) mit Hilfe einfacher Differenzen zwischen Satelliten der Modellierungen der ersten Widelane-Mehrdeutigkeiten durchgeführt wird.

4.  Verfahren nach irgendeinem der Ansprüche 1 bis 3, bei dem die erste und zweite Frequenz unter den Frequenzen L1, L2, L5 und E6 ausgewählt wird.

5.  Verfahren nach irgendeinem der Ansprüche 1 bis 4, bei dem jeder Satellit der Satellitengruppe ein drittes Funknavigationssignal auf einer dritten Frequenz überträgt, die von der ersten und zweiten Frequenz verschieden ist, bei dem
für jeden Satelliten der Satellitengruppe das dritte Signal ebenfalls empfangen wird;
nicht differenzierte Code- und Phasenmessungen des dritten empfangenen Signals für jeden Satelliten der Satellitengruppe durchgeführt werden, wobei die Phasenmessung des dritten Signals eine a priori unbekannte ganzzahlige Mehrdeutigkeit aufweist, so dass die Widelane-Kombination der Phasenmessungen des ersten und dritten Signals eine a priori unbekannte ganzzahlige zweite Widelane-Mehrdeutigkeit aufweist;
die zweiten Widelane-Mehrdeutigkeiten an der Satellitengruppe in kohärenter Weise bestimmt werden; und
das Festlegen der Position des Empfängers ebenfalls mit Hilfe der Code- und Phasenmessungen der dritten Signale sowie der in kohärenter Weise an der Satellitengruppe bestimmten zweiten Widelane-Mehrdeutigkeiten erfolgt.

6.  Verfahren nach Anspruch 5, bei dem die kohärente Bestimmung der zweiten Widelane-Mehrdeutigkeiten an der Satellitengruppe analog zu der kohärenten Bestimmung der ersten Widelane-Mehrdeutigkeien an der Satellitengruppe durchgeführt wird.

7.  Verfahren nach Anspruch 5 oder 6, bei dem die dritte Frequenz unter den Frequenzen L1, L2, L5 und E6 ausgewählt wird.

8.  Verfahren nach irgendeinem der Ansprüche 1 bis 7, bei dem von den nicht differenzierten Codemessungen mindestens eine ein Rauschen von weniger als 0,5 m, vorzugsweise weniger als 0,25 m aufweist.

9. Verfahren nach irgendeinem der Ansprüche 5 bis 7, bei dem Jede der nicht differenzierten Codemessungen ein Rauschen von mehr als 0,5 m aufweist.

10. GNSS-Empfänger, **gekennzeichnet durch** Mittel, die für die Durchführung des Verfahrens nach Irgendeinem der Ansprüche 1 bis 9 eingerichtet sind.

11. GNSS-Empfänger nach Anspruch 10, wobei die Mittel für die Durchführung des Verfahrens ein in einem Speicher des Empfängers abgespeichertes Programm umfassen, das so eingerichtet ist, dass der Empfänger gemäß dem Verfahren betrieben wird, wenn das Programm im Empfänger ausgeführt wird.

**Fig. 1**

Mesure des $L_1$, $L_2$, $L_3$, $P_1$, $P_2$, $P_3$  ~ 10

Calcul des estimateurs widelane $\hat{N}_w$  ~ 12

Réception des $\mu_{eme}$  ~ 13

Détermination de $\mu_{rec}$ et du jeu d'ambiguïtés widelane cohérentes  ~ 14

Réception des $h_{opt,eme}$ adaptés à la combinaison optimale prédéfinie  ~ 15

Calcul des pseudo-distances par combinaison optimale prédéfinie  ~ 16

Détermination de la position géographique  ~ 18

17

**EP 2 335 085 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- FR 0754139

### Littérature non-brevet citée dans la description

- **D. LAURICHESSE et al.** Real Time Zero-Différence Ambiguities Fixing and Absolute RTK. *Proc. of the 2008 National Meeting of the ION,* 2008